# EUROPEAN PATENT APPLICATION

(11) **EP 4 530 604 A1**
(43) Date of publication of application: **02.04.2025**
(21) Application number: 22965000.7
(22) Date of filing: 29.12.2022
(51) Int. Cl.: G01N 15/06

(54) **ALARM WITH OBSTACLE DETECTION FUNCTION**

(30) Priority: 08.11.2022 CN 202211390376
(71) Applicant: Siterwell Electronics Co., Limited, Jiangbei District Ningbo Zhejiang Province 315000 (CN)
(72) Inventor: LI, Guangjun, Ningbo, Zhejiang 315000 (CN); YOU, Shixi, Ningbo, Zhejiang 315000 (CN); FAN, Zengchang, Ningbo, Zhejiang 315000 (CN); WANG, Haichun, Ningbo, Zhejiang 315000 (CN); WANG, Jiejun, Ningbo, Zhejiang 315000 (CN); CHEN, Maotao, Ningbo, Zhejiang 315000 (CN); CHEN, Dongfang, Ningbo, Zhejiang 315000 (CN); DING, Zhenxiao, Ningbo, Zhejiang 315000 (CN); MA, Lirong, Ningbo, Zhejiang 315000 (CN); WEI, Chan, Ningbo, Zhejiang 315000 (CN); WANG, Liping, Ningbo, Zhejiang 315000 (CN); YU, Fanglei, Ningbo, Zhejiang 315000 (CN)
(74) Representative: Meyer-Dulheuer MD Legal Patentanwälte PartG mbB
(86) International application number: PCT/CN2022/143179
(87) International publication number: WO 2024/098536

(57) **Abstract**

An alarm with a function of obstacle detection comprises a mounting base, an obstacle sensor, a covering and an alarm sensor. The obstacle sensor is mounted on the mounting base, the air flow passage is defined between the covering and the mounting base, the obstacle sensor has a detection region and the air flow passage is located within the detection region of the obstacle sensor, the alarm sensor is disposed on the covering, the alarm sensor is located within the detection region of the obstacle sensor. The air flow passage provides a passage for a substance that triggers the alarm sensor to reach the alarm sensor. The blind region for obstacle detection of the obstacle sensor in the environment where the alarm sensor is located will be eliminated, and the obstacle sensor can fully monitor obstacles, thereby improving the operation reliability of the alarm.

## Description

### BACKGROUND

### Technical Field

The present invention relates to a field of alarms, and in particular to an alarm with a function of obstacle detection.

### Description of Related Art

The alarm realizes fire prevention by monitoring the concentration of smoke, and an ionic smoke sensor or a photoelectric sensor is used inside the alarm. The radioactive substance in the sensor of the ionic alarm can generate current. Smoke particles in the smoke will disturb the current after entering the sensor, so that the alarm will sound an alarm. The photoelectric alarm will emit an infrared beam. When smoke particles exist in a room, the beam will scatter to the sensor, and the sensor will sound an alarm after sensing a certain beam.

As known from the operating principle of the alarm, one of the conditions for the alarm to reliably sound an alarm is that smoke particles can smoothly reach the alarm sensor without obstacles, so that the alarm sensor can effectively monitor the smoke concentration in the environment.

However, due to the accumulation of debris near the alarm sensor, the blockage of the air flow passage of the alarm by small organisms such as mosquitoes and other factors, the air flow is prevented from entering the alarm, so that the alarm sensor in the alarm cannot accurately or quickly detect the smoke concentration in the environment.

Therefore, it is necessary to detect whether there are obstacles near the alarm and in the air flow passage of the alarm, which prevent the air flow from entering the alarm.

In the prior art, the alarm sensor and the obstacle detection sensor are mounted in the same mounting structure, so the obstacle detection sensor will have a blind region when it monitors obstacles in the environment where the alarm sensor is located. As a result, it is impossible to fully determine whether there are obstacles in the environment where the alarm sensor is located, resulting in great safety hazards for the reliable operation of the alarm sensor.

It can be seen that the technical problem to be solved by the present application is how to eliminate the detection blind region of the obstacle sensor in the environment where the alarm sensor is located so as to fully monitor obstacles in the environment where the alarm sensor is located.

### SUMMARY

A technical problem to be solved by the present invention is to provide an alarm with a function of obstacle detection, which aims to solve the technical problem in the prior art how to eliminate a detection blink are of an obstacle sensor in the environment where an alarm sensor is located so as to fully monitor obstacles in the environment where the alarm sensor is located.

For solving the above technical problem, the alarm with an obstacle detection function comprises:
a mounting base;
an obstacle sensor mounted on the mounting base;
a covering; and
an alarm sensor disposed on the covering;
wherein an air flow passage for allowing a detected object to reach the alarm sensor is defined between the covering and the mounting base;
the obstacle sensor has a detection region, both the air flow passage and the alarm sensor are located within the detection region of the obstacle sensor.

Preferably, a reflector in a conical shape is connected to the covering being adjacent to the mounting base;
the reflector has a tip facing the obstacle sensor and being aligned with a center of the obstacle sensor.

Preferably, the obstacle sensor is an ultrasonic sensor.

Preferably, the covering has at least one support leg, the covering is detachably connected to the mounting base through the support leg.

Preferably, the mounting base has at least one limiting member, each support leg has an end with an insertion member extending from the end of each covering, each insertion member has a limiting hole which is adapted to the limiting member for receiving a corresponding limiting member;
the mounting base has at least one insertion hole which is adapted to the insertion member for receiving a corresponding insertion member;
wherein when each insertion member is inserted into the corresponding insertion hole, each limiting member is inserted into the corresponding limiting hole.

Preferably, the number of the support leg is four and each support leg has one insertion member at the end of the support leg, the position and the number of the insertion holes correspond to the position and the number of the support legs.

Preferably, each limiting member has an end with a wedge-shaped slope, when the insertion member moves toward corresponding insertion hole, the insertion member touches the limiting member and push the limiting member through the wedge-shaped slope, and each limiting member resists against the corresponding insertion member through a spring.

Preferably, the covering has a first port, and the mounting base has a second port, the first port is adapted to the second port;
a circuit in the covering is electrically connected to a circuit in the mounting base when the first port is connected to the second port.

Preferably, the covering has at least one support leg, the first port is located at the support leg, the position of the second port corresponds to the position of the first port.

Preferably, the covering has an annular edge and a top end surface adjacent to the mounting base; the covering has an inclined surface located adjacent to the air flow passage extending from the annular edge to a center of the top end surface, the covering has a grid on the inclined surface, and the grid has a plurality of grid strips successively stacked on from the annular edge to the top end surface.

The present invention has the following advantages:

The alarm with a function of obstacle detection of the present application comprises the mounting base, the obstacle sensor, the covering and the alarm sensor, wherein the obstacle sensor is mounted on the mounting base, the air flow passage is defined between the covering and the mounting base, the obstacle sensor has a detection region and the air flow passage is located within the detection region of the obstacle sensor, the alarm sensor is disposed on the covering, the alarm sensor is located within the detection region of the obstacle sensor. The air flow passage provides a passage for a substance that triggers the alarm sensor to reach the alarm sensor. In this way, the obstacle sensor and the alarm sensor are disposed on the mounting base and the covering, respectively, and both the alarm sensor and the air flow passage are located within the detection region of the obstacle sensor, so that the blind region for obstacle detection of the obstacle sensor in the environment where the alarm sensor is located is eliminated, and the obstacle sensor can fully monitor obstacles in the environment where the alarm sensor is located, thereby improving the operation reliability of the alarm.

### BRIEF DESCRIPTION OF THE DRAWINGS

Fig. 1 is a perspective view of an alarm with a function of obstacle detection according to an embodiment of the present invention;
Fig. 2 is a sectional view of the alarm with a function of obstacle detection according to the embodiment of the present invention;
Fig. 3 is an exploded view of the alarm with a function of obstacle detection according to the embodiment of the present invention;
Fig. 4 is a perspective view of a covering of the alarm according to the embodiment of the present invention;
Fig. 5 is a top view of the covering of the alarm according to the embodiment of the present invention;
Fig. 6 is a perspective view of a mounting base and a hanging plate of the alarm according to the embodiment of the present invention;
Fig. 7 is a perspective view of the hanging plate of the alarm according to the embodiment of the present invention;
Fig. 8 is a perspective view of the mounting base and the covering of the alarm according to the embodiment of the present invention showing a part of internal configuration of the mounting base;
Fig. 9 is a perspective view of a limiting member and an insertion member of the alarm according to the embodiment of the present invention.

The reference numbers and the corresponding names of components are listed as below:
10: alarm;
11: mounting base; 111: second port; 112: first clamping block; 113: insertion hole; 114: limiting member; 115: wedge-shaped slope; 116: spring; 12: obstacle sensor; 13; covering; 131: reflector; 132: support leg; 133: first port; 134: grid; 135: grid strip; 136: insertion member; 137: limiting hole; 14: air flow passage; 15: alarm sensor; 16: hanging plate; 161; mounting hole; 162: scale; 163: neck; and, 164: second clamping block.

### DESCRIPTION OF THE EMBODIMENTS

To clarify the object, technical scheme and advantages of the alarm of the present invention, the present invention will be further described below in detail by embodiments with reference to the accompanying drawings. All of the embodiments will be illustrated in drawings, in which same or similar reference numbers point to same or similar components or components with same or similar functions. It should be noted that exemplary embodiments illustrated in drawings are only used for better illustration and should not be regarded as restrictions to the present invention.

It should be noted that in the description of the present invention, the terms "length", "width", "up, down", "left, right", "parallel", "top, bottom", etc. to describe a direction or position based on the accompanying drawings are only used for simplified description of the present invention, instead of indicating that devices or elements must have particular orientation or must be constructed and operated in a particular orientation, so that these terms should not be used as restrictions.

In addition, the terms "first", "second" are only used for better description, instead of indicating relative importance or number of the components. Therefore, the determiners, for example, "first", "second" can explicitly represent or indicate one or more technical features. In the description of the present invention, "a plurality of" means two or more than two, except for special provisions.

It should be noted that in the description of the present invention, the terms "mount", "connect", "joint" should be understood broadly, except for special provisions. For example, fixed connection, detachable connection, integrated connection, mechanical connection, electrical connection, direct connection, indirect connection are all belong to the scope of ways of "connection". It also can be internal connection or interaction between two components. For general technical personnel in this field, specific understanding of the above-stated terms is required according to the specific situation.

In the description of the present invention, the terms "above, below" used to describe positions of two components can be understood as follows: a first component directly attaches a second component, or the first component attaches the second component through other components. In addition, the terms "above, over, on" used in the description of the present invention mean orientations of both "right above" or "slanted above", or mean that the first component is located higher than the second component; the terms "lower, below, under" mean orientations of both "right below" or "slanted below", or mean that the first component is located lower than the second component.

The following disclosure describes many different embodiments or examples for implementing different structures of the alarm of the present invention. In order to simplify the disclosure of the present invention, the components and arrangements in particular embodiments will be described below. Of course, they are only examples, and are not intended to limit the present invention. In addition, in the present invention, the reference numbers and/or reference letters can be repetitively used in different embodiments, and this repetition is performed for the purpose of simplicity and clarity and does not indicate the relationship among various embodiments and/or arrangements discussed. Moreover, the present invention provides the examples of various particular processes and materials, but those skilled in this field can recognize the application of other processes and/or the use of other materials.

In some embodiments of the present application, an alarm 10 with a function of obstacle detection comprises the mounting base 11, the obstacle sensor 12, the covering 13 and the alarm sensor 15. The obstacle sensor 12 is mounted on the mounting base 11, the air flow passage 14 is defined between the covering 13 and the mounting base 11, the obstacle sensor 12 has a detection region and the air flow passage 14 is located within the detection region of the obstacle sensor 12. The alarm sensor 15 is disposed on the covering 13, the alarm sensor 15 is located within the detection region of the obstacle sensor 12. The air flow passage 14 provides a passage for a substance that triggers the alarm sensor 15 to reach the alarm sensor 15. In this way, the obstacle sensor 12 and the alarm sensor 15 are respectively disposed on the mounting base 11 and the covering 13, and both the alarm sensor 15 and the air flow passage 14 are located within the detection region of the obstacle sensor 12, so that the blind region of the obstacle sensor 12 performing the obstacle detection in the environment where the alarm sensor 15 is located is eliminated, and the obstacle sensor 12 can fully monitor obstacles in the environment where the alarm sensor 15 is located, thereby the operation reliability of the alarm 10 of the present invention can be improved.

### Embodiment 1

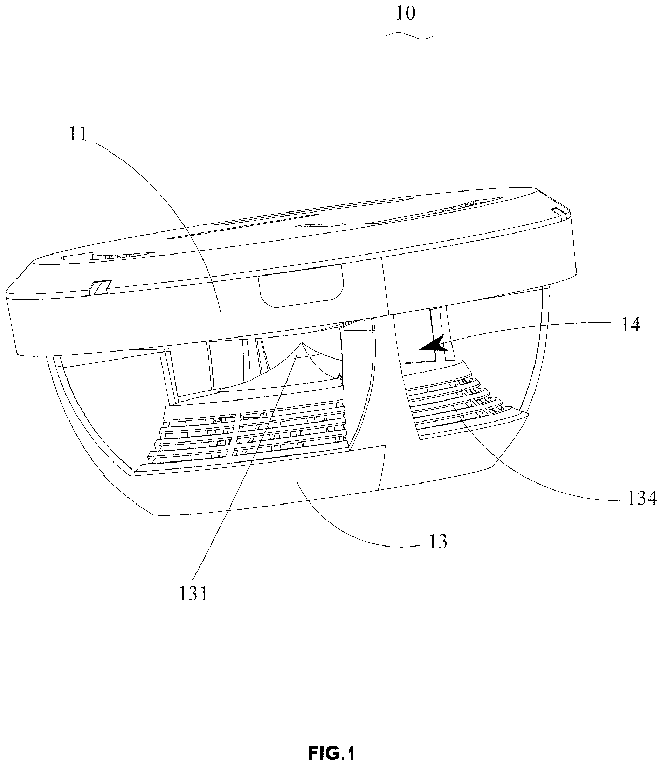

As shown in Figs. 1-3, in the embodiment of the present application, the alarm 10 with a function of obstacle detection comprises the mounting base 11, the obstacle sensor 12, the covering 13 and the alarm sensor 15, wherein the obstacle sensor 12 is mounted on the mounting base 11, the air flow passage 14 is defined between the covering 13 and the mounting base 11, the obstacle sensor 12 has a detection region and the air flow passage 14 is located within the detection region of the obstacle sensor 12, the alarm sensor 15 is disposed on the covering 13, the alarm sensor 15 is located within the detection region of the obstacle sensor 12. The air flow passage 14 provides a passage for a substance that triggers the alarm sensor 15 to reach the alarm sensor 15.

In this way, the obstacle sensor 12 and the alarm sensor 15 are disposed on the mounting base 11 and the covering 13, respectively, and both the alarm sensor 15 and the air flow passage 14 are located within the detection region of the obstacle sensor 12, so that the blind region for obstacle detection 12 of the obstacle sensor 12 in the environment where the alarm sensor 15 is located is eliminated, and the obstacle sensor 12 can fully monitor obstacles in the environment where the alarm sensor 15 is located, thereby improving the operation reliability of the alarm 10.

It should be understood that, in the embodiment of the present application, after the alarm 10 is mounted at the operating position, an air flow enters the covering 13 through the air flow passage 14 so as to reach the alarm sensor 15, and the concentration of smoke particles in the air flow is detected by the alarm sensor 15. During the whole operating process of the alarm 10, the air flow continuously enters the covering 13 through the air flow passage 14 and reaches the alarm sensor 15, so that the alarm sensor 15 monitors in real time the concentration of the detected object in the environment where the alarm 10 is located. When the alarm sensor 15 monitors that the concentration of the detected object exceeds a warning value, a sound-light alarm is triggered or a radio signal is transmitted to a remote terminal to prompt the possible occurrence of relevant accidents.

When an obstacle exists in the air flow passage 14, the air flow entering the covering 13 will be blocked, so that the air flow entering the covering 13 is reduced or the air flow cannot enter the covering 13. In this case, the concentration of the detected object monitored by the alarm sensor 15 will be smaller, or even the existence of the detected object cannot be monitored. Thus, the sensitivity of the alarm 10 to the detected object is reduced, the alarm 10 is unable to sound an alarm in real time, and the safety hazard in the environment where the alarm 10 is located is increased.

Similarly, when an obstacle exists near the alarm 10, the air flow reaching the alarm 10 is reduced, or the air flow on a side of the obstacle away from the alarm 10 cannot smoothly reach the alarm 10. Thus, the alarm sensor 15 cannot accurately acquire the information of the air flow near the alarm 10, and thus cannot reliably monitor the concentration of the detected object near the alarm 10.

As shown in Figs. 1-2, in the embodiment of the present application, the obstacle sensor 12 is disposed on the mounting base 11, the alarm 15 is disposed on the covering 13, and the air flow passage 14 is defined between the covering 13 and the mounting base 11. The obstacle sensor 12 monitors obstacles in the spatial region of the mounting base 11 on the covering 13 side, so that both the air flow passage 14 and the alarm sensor 15 are located in the monitoring range of the obstacle sensor 12, the monitoring blind region of the obstacle sensor 12 is eliminated, and the obstacle sensor 12 can fully monitor the obstacle at the alarm 10.

When an obstacle exists near the air flow passage 14 or the alarm 10, the obstacle can be detected by the obstacle sensor 12. After the obstacle sensor 12 detects the obstacle, the alarm 10 gives an alarm to prompt the existence of the obstacle, so that an operator can remove the obstacle in time so as to eliminate the safety hazard.

Specifically, the alarm 10 may be a smoke alarm, or a harmful gas alarm, a thermal alarm or the like. When the alarm 10 is a smoke alarm, the detected object is smoke; when the alarm 10 is a harmful gas alarm, the detected object is a harmful gas; and, when the alarm 10 is a thermal alarm, the detected object is a high-temperature air flow.

The obstacle sensor 12 may be a photoelectric sensor or an ultrasonic sensor. The obstacle sensor 12 emits a sensing signal to the spatial region of the mounting base 11 adjacent to the covering 13. When the sensing signal comes into contact with an obstacle, the sensing signal is reflected back to the obstacle sensor 12 by the obstacle, so that the obstacle sensor 12 can detect the existence of the obstacle.

In an application scenario of the embodiment of the present application, the alarm 10 is hung on the ceiling inside the room, the mounting base 11 is mounted adjacent to the ceiling, and the covering 13 is located on the side of the mounting base 11 away from the ceiling. The obstacle sensor 12 is disposed on the mounting base 11, the alarm sensor 15 is disposed on the covering 13, and the air flow passage 14 is defined between the covering 13 and the mounting base 11.

When an obstacle exists in the air flow passage 14, the air flow entering the covering 13 will be blocked, and the interaction between the ambient air around the alarm and the air flow passage 14 is blocked, so that the monitoring of the smoke concentration by the alarm sensor 15 will be affected.

The obstacle sensor 12 emits a sensing signal to the covering 13, the sensing signal emitted by the obstacle sensor 12 is reflected by the obstacle, and the obstacle sensor 12 receives the reflected sensing signal, so that the strength of the reflected sensing signal received by the obstacle sensor 12 is enhanced. When the strength of the received reflected sensing signal is enhanced, it can be determined that an obstacle exists in the air flow passage 14. The alarm 10 gives an alarm to prompt the existence of the obstacle, so that the operator can remove the obstacle in the air flow passage 14 and the air flow passage 14 returns to the unblocked state.

In another application scenario of the embodiment of the present application, the alarm 10 is mounted on a wall inside the room, the mounting base 11 is mounted adjacent to the wall, and the covering 13 is located on the side of the mounting base 11 away from the wall. The obstacle sensor 12 is disposed on the mounting base 11, the alarm sensor 15 is disposed on the covering 13, and the air flow passage 14 is defined between the covering 13 and the mounting base 11.

When debris is accumulated near the alarm 10, the debris will block the air flow reaching the alarm 10, so that the air flow with smoke cannot smoothly reach the alarm 10, and even the alarm sensor 15 cannot monitor the smoke in the environment where the alarm 10 is located.

The obstacle sensor 12 emits a sensing signal toward the side of the mounting base 11 away from the wall, the sensing signal emitted by the obstacle sensor 12 is reflected by the obstacle, and the obstacle sensor 12 receives the reflected sensing signal, so that enhancing the strength of the reflected sensing signal received by the obstacle sensor 12. When the received reflected sensing signal is enhanced, it can be determined that an obstacle exists near the alarm 10. The alarm 10 gives an alarm to prompt the existence of the obstacle, so that the operator can remove the debris near the alarm 10 and the smoothness of the air flow near the alarm 10 is ensured.

It should be noted that, during mounting the alarm 10, the hanging plate 16 has a mounting surface for connecting to the mounting base 11. That is, the mounting base 11 is adjacent to the mounting surface, and the covering 13 is farther away from the mounting surface.

The obstacle sensor 12 emits a sensing signal to the covering 13, so a spatial region of the mounting base 11 away from the mounting surface is located within the monitoring range of the obstacle sensor 12. That is, the air flow passage 14, the covering 13 and the alarm sensor 15 are all located within the monitoring range of the obstacle sensor 12.

In this way, the air flow passage 14, the covering 13 and the alarm sensor 15 are in the monitoring range of the obstacle sensor 12 so that the monitoring blind region of the obstacle sensor 12 to an obstacle that blocks the alarm sensor 15 is eliminated, the obstacle sensor 12 can fully monitor obstacles in the environment where the alarm sensor 15 is located, and the operation reliability of the alarm 10 is improved.

### Embodiment 2

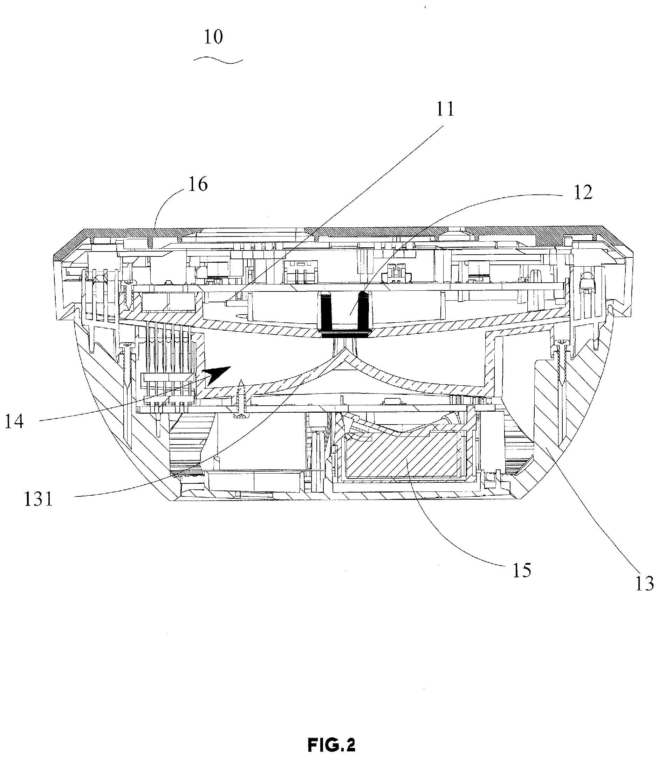

As shown in Fig. 2, in this embodiment, a reflector 131 in a conical shape is connected to the covering 13 being adjacent to the mounting base 11;
the reflector 131 has a tip facing the obstacle sensor 12 and being aligned with a center of the obstacle sensor 12.

A longitudinal section of the reflector 131 is in a conical shape with straight or curved edges.

The signal emitted by the obstacle sensor 12 is diffused by the reflector 131 to a space where the alarm 10 is located.

In the embodiment of the present application, the sensing signal emitted by the obstacle sensor 12 is reflected by the reflector 131, and the sensing signal is diffused to a space near the alarm 10. The sensing signal will pass through the air flow passage 14 during the diffusion process.

In this way, the blind region for obstacle detection of the obstacle sensor 12 in the environment where the alarm sensor 15 is located is eliminated, the obstacle sensor 12 can fully monitor obstacles in the environment where the alarm sensor 15 is located, and the operation reliability of the alarm 10 is improved.

Specifically, the obstacle sensor 12 emits a sensing signal. Depending on different types of the obstacle sensor 13, the sensing signal may be a beam, ultrasonic waves or electromagnetic waves.

With reference to Figs. 1-2, it should be understood that, in the embodiments of the present application, the obstacle sensor 12 emits a sensing signal, and the sensing signal reaches the reflector 131 and is then reflected by the reflector 131. Since the reflector 131 is in a conical shape, the sensing signal will be diffused to the space where the alarm 10 is located by the reflection surface of the reflector 131. Since the reflector 131 is connected to the covering 13 being adjacent to the mounting base 11, when the sensing signal is diffused by the reflector 131, the sensing signal will pass through the air flow passage 14 defined between the covering 13 and the mounting base 11 and is diffused to the space near the alarm 10.

When the sensing signal passes through the air flow passage 14 and is then diffused to the space near the alarm 10, if an obstacle exists near the air flow passage 14 or the alarm 10, the sensing signal will be reflected by the obstacle, and a part of the sensing signal reflected by the obstacle will be received by the obstacle sensor 12, so that the strength of the reflected sensing signal received by the obstacle sensor 12 is enhanced. When the received reflected sensing signal is enhanced, the existence of the obstacle can be monitored.

In this way, it can be determined that an obstacle exists near the alarm 10 or in the air flow passage 14, and the alarm 10 gives an alarm to prompt the existence of the obstacle, so that the operator can remove the obstacle, the smoothness of the air flow near the alarm 10 and in the air flow passage 14 is ensured, and the operation reliability of the alarm 10 is improved.

### Embodiment 3

With reference to Fig. 2, in this embodiment of the present invention, the obstacle sensor 12 is an ultrasonic sensor.

It should be understood that the ultrasonic wave has high directivity and travels a long distance in a medium, and the ultrasonic wave will be reflected by an obstacle when encountering the obstacle and then will return to the obstacle sensor 12. The obstacle sensor 12 motors the existence of the obstacle by receiving reflected ultrasonic wave.

In this way, by emitting and receiving the ultrasonic wave, the obstacle in the environment where the alarm 10 is located and the obstacle in the air flow passage 14 are monitored. When it is determined that an obstacle exists near the alarm 10 or in the air flow passage 14, and the alarm 10 gives an alarm to prompt the existence of the obstacle, so that the operator can remove the obstacle, and the smoothness of the air flow near the alarm 10 and in the air flow passage 14 is ensured.

Specifically, the obstacle sensor 12 comprises an emitter and a receiver. The emitter of the obstacle sensor 12 emits an ultrasonic wave, the ultrasonic wave encounters an obstacle, is then reflected and is received by the receiver of the obstacle sensor 12, so that the strength of the reflected sensing signal received by the obstacle sensor 12 is enhanced. When the received reflected sensing signal is enhanced, the existence of the obstacle can be monitored.

In this way, the obstacle in the environment where the alarm 10 is located and the obstacle in the air flow passage 14 are monitored by the obstacle sensor 12.

### Embodiment 4

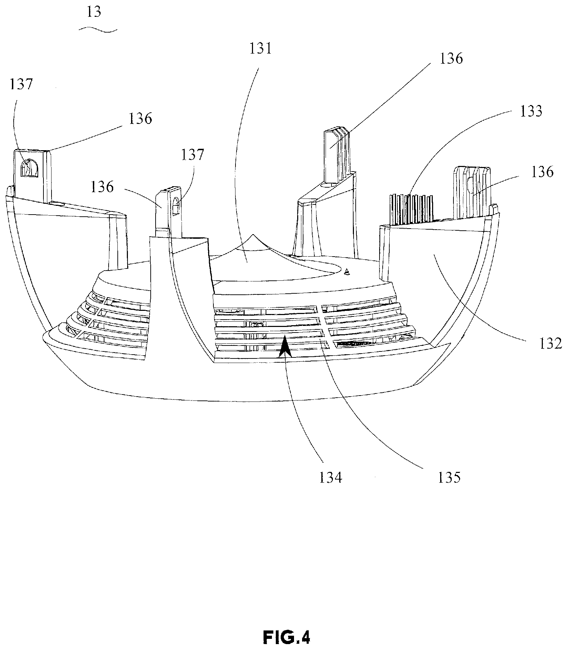

With reference to Figs. 1 and 3-4, in this embodiment of the present invention, the covering 13 has at least one support leg 132, the covering 13 is detachably connected to the mounting base 11 through the support leg 132.

It should be understood that, in this embodiment of the present application, the covering 13 is mounted on the mounting base 11 through the support leg 132, and the air flow passage 14 for allowing an air flow to pass therethrough is defined between the covering 13 and the mounting base 11. When it is monitored that an obstacle exists in the air flow passage 14, the alarm 10 gives an alarm to the existence of the obstacle, so as to prompt the operator to remove the obstacle. In the process of removing an obstacle by the operator, when the operator finds that an obstacle exists in the alarm 10, the covering 13 can be detached from the mounting base 11, so that the obstacle is successfully removed; and, when the operator finds that an obstacle exists near the alarm 10, the operator can directly remove the obstacle near the alarm.

In this way, in the process of removing the obstacle at the air flow passage 14, the covering 13 is detached, so that the air flow passage 14 forms an open space, and the obstacle removing process is more convenient, quicker and more efficient.

In one of the embodiments of the present application, specifically, when the covering 13 only has one support leg 132, the support leg 132 having an end with a clamping structure will be arranged on an edge of the covering 13, and the mounting base 11 has a corresponding clamping slot adapted to the clamping structure of the support leg 132. When the covering 13 is disposed on the mounting base 11, the clamping structure of the support leg 132 is inserted into the clamping slot of the mounting base 11, so that the covering 13 and the mounting base 11 are connected. Supported by the support leg 132, the air flow passage 14 for allowing the air flow to pass therethrough is defined between the covering 13 and the mounting base 11, the air flow near the alarm 10 enters the covering 13 through the air flow passage 14 and is then monitored by the alarm sensor 15, and the smoke concentration in the air flow is monitored by the alarm sensor 15.

Since the covering 13 is connected to the mounting base 11 through a support leg 132, a part of the covering 13 beyond the support leg 132 is suspended. At this time, the air flow passage 14 has a large space for the circulation of the air flow, so that it is advantageous for the smooth flowing of the air flow. Since the space between the covering 13 and the mounting base 11 is large, in the process of removing the obstacle at the air flow passage 14, there will be less hindrance in the space, so that the operator can remove the obstacle more effectively and conveniently. When possible, in the obstacle removing process, it is unnecessary to detach the covering 13 from the mounting base 11.

In one of the embodiments of the present application, specifically, the covering 13 has two or more support legs 132 arranged at regular intervals on the edge of the covering 13. Each support leg 132 has an end with a clamping structure, and the mounting base 11 has a corresponding plurality of clamping slots adapted to the clamping structures of the support legs 132. When the covering 13 is disposed on the mounting base 11, a clamping structure of each support leg 132 is inserted into the corresponding clamping slot of the mounting base 11, so that the covering 13 and the mounting base 11 are connected. Supported by the support legs 132, the air flow passage 14 for allowing the air flow to pass therethrough is defined between the covering 13 and the mounting base 11, the air flow near the alarm 10 enters the covering 13 through the air flow passage 14 and is then monitored by the alarm sensor 15, and the smoke concentration in the air flow is monitored by the alarm sensor 15.

Since the covering 13 is supported by a plurality of support legs 132, the connection between the covering 13 and the mounting base 11 is more stable, and the possibility of relative shaking between the covering 13 and the mounting base 11 can be effectively reduced. Since the sensing signal emitted by the obstacle sensor 12 is diffused to the spatial region near the alarm 10 by the reflector 131 at the covering 13, the covering 13 is firmly mounted on the mounting base 11, and the reliability of the obstacle sensor 12 in monitoring obstacles can be effectively ensured.

### Embodiment 5

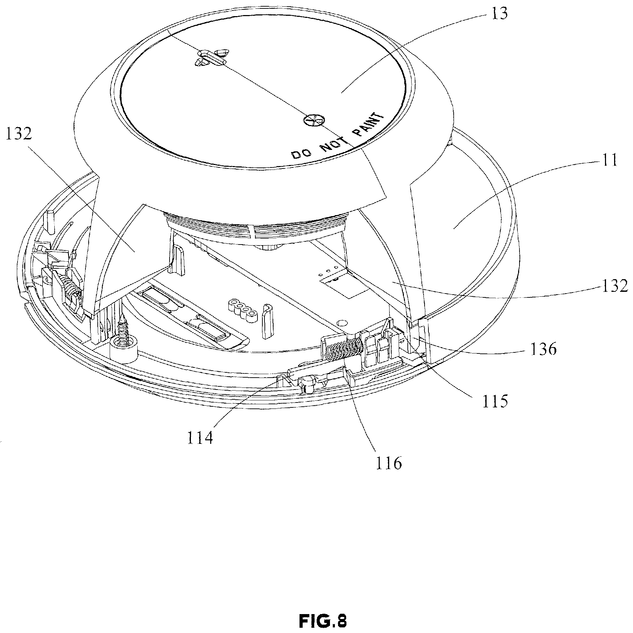

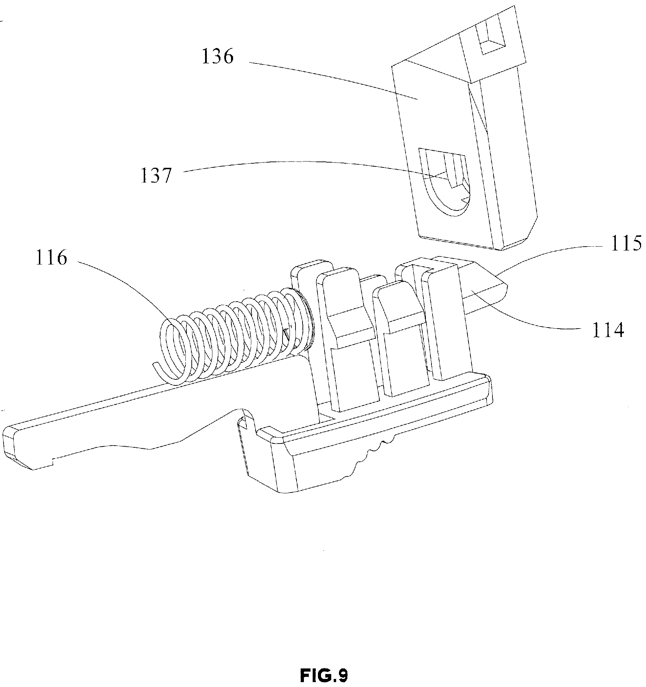

As shown in Figs. 8-9, in this embodiment, the mounting base 11 has at least one limiting member 114, each support leg 132 has an end with an insertion member 136 extending from the end of each covering 13, each insertion member 136 has a limiting hole 137 which is adapted to the limiting member 114 for receiving a corresponding limiting member 114; the mounting base 11 has at least one insertion hole 113 which is adapted to the insertion member 136 for receiving a corresponding insertion member 136; wherein when each insertion member 136 is inserted into the corresponding insertion hole 113, each limiting member 114 is inserted into the corresponding limiting hole 137. The number of the support leg 132 is four and each support leg 132 has one insertion member 136 at the end of the support leg 132, the position and the number of the insertion holes 113 correspond to the position and the number of the support legs 132. Each limiting member 114 has an end with a wedge-shaped slope 115; when the insertion member 136 moves toward corresponding insertion hole 113, the insertion member 136 touches the limiting member 114 and push the limiting member 114 through the wedge-shaped slope 115, and each limiting member 114 resists against the corresponding insertion member 136 through a spring 116.

When the covering 13 is mounted on the mounting base 11, the insertion member 136 moves toward the insertion hole 113. After the insertion member 136 comes into the limiting member 114, the insertion member 136 is continuously inserted into the insertion hole 113. At this time, the insertion member 136 pushes the limiting member 114 through the wedge-shaped slope 115 at the end of the limiting member 114. The insertion member 136 continuously extends into the insertion hole 113 until the limiting hole 137 reaches a position of the limiting member 114. During this process, each limiting member 114 resists against the corresponding insertion member 136 through the spring 116. After the limiting hole 137 reaches the position of limiting member 114, the limiting member 114 is inserted into the limiting hole 137 under the action of the spring 116.

In this way, by inserting the insertion member 136 into the insertion hole 113 and inserting the limiting member 114 into the limiting hole 137, the covering 13 is firmly mounted at the mounting base 11.

The covering 13 is connected to the mounting base 11 through four support legs 132, so that the mounting structure is more stable. Supported by four support legs 132, the air flow passage between the covering 13 and the mounting base 11 is more unblocked, so that the air flow can enter the alarm from various directions, and a warning of the alarm 10 is more efficient and reliable.

### Embodiment 6

As shown in Figs. 2-3, in the embodiment of the present invention, the covering 13 has a first port 133, and the mounting base 11 has a second port 111, the first port 133 is adapted to the second port 111;
a circuit in the covering 13 is electrically connected to a circuit in the mounting base 11 when the first port 133 is connected to the second port 111.

In this way, the circuit in the covering 13 and the circuit in the mounting base 11 are electrically connected through the first port 133 and the second port 111 to exchange electric energy or electric signals.

Specifically, a first circuit board is mounted on the covering 13, the alarm sensor 15 and the control circuit, the smoke alarm circuit and the like of the alarm sensor 15 are all arranged on the first circuit board and are electrically connected to an external circuit through the first port 133. A second circuit board is mounted on the mounting base 11, the obstacle sensor 12 and the control circuit, the obstacle alarm circuit and the like of the obstacle sensor 12 are all arranged on the second circuit board and are electrically connected to an external circuit through the second port 111.

The power supply of the alarm 10 may be an external power supply, and power is supplied to the first circuit board and the second circuit board simultaneously or separately through an external power supply.

When the external power supply supplies power to the first circuit board and the second circuit board simultaneously, the external power supply is firstly connected to one of the first circuit board and the second circuit board and then supplies power to the other one of the first circuit board and the second circuit board. For example, the external power supply is firstly connected to the first circuit board and then supplies power to the second circuit board through the first circuit board. The first circuit board and the second circuit board are electrically connected through the first port 133 and the second port 111. The electric energy is transmitted to the first circuit board through the external power supply, and then transmitted to the second circuit board through the first port 133 and the second port 111.

When the external power supply supplies power to the first circuit board and the second circuit board separately, the external power supply is connected to the first circuit board and the second circuit board separately, and the external power supply directly supplies power to the first circuit board and the second circuit board separately.

Of course, the power supply of the alarm 10 may also be a separate power supply, that is, at least one of the first circuit board and the second circuit board is a separate power supply capable of storing electricity.

When the first circuit board and the second circuit board have separate power supplies, the respective separate power supplies of the first circuit board and the second circuit board supply power to the first circuit board and the second circuit board, respectively.

When only one of the first circuit board and the second circuit board has a separate power supply, the circuit board with the separate power supply supplies power to the circuit board without the separate power supply through a coordination of the first port 133 and the second port 111. For example, the first circuit board has a separate power supply, the separate power supply supplies power to the first circuit board and then supplies power to the second circuit board through the coordination of the first port 133 and the second port 111.

When information interaction needs to be performed between the first circuit board and the second circuit board, it is also possible to realize information interaction through the coordination of the first port 133 and the second port 111.

### Embodiment 7

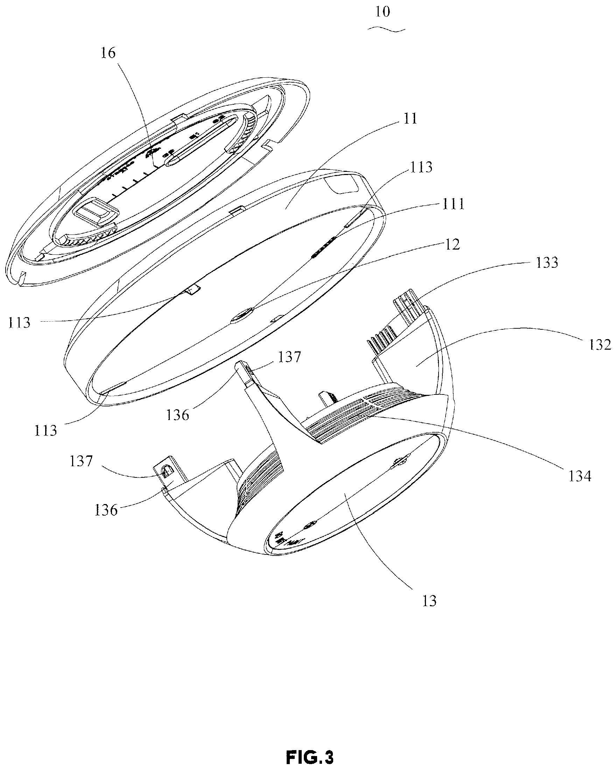

With reference to Figs. 3-4, in the embodiment of the present invention, the first port 133 is located at the support leg 132, the position of the second port 111 corresponds to the position of the first port 133.

It should be understood that, the covering 13 is connected to the mounting base 11 through the support leg 132, so the covering 13 comes into contact with the mounting base 11 through the support leg 132, and a part of the covering 13 beyond the support leg 132 is suspended at the mounting base 11. A space where the covering 13 is suspended at the mounting base 11 is defined as the air flow passage 14.

Since the covering 13 comes into contact with the mounting base 11 through only the support leg 132, the first port 133 is located at the support leg 132. When the covering 13 is mounted on the mounting base 11 through the support leg 13, the first port 133 can be connected to the second port 111 without arranging additional structures.

### Embodiment 8

With reference to Figs. 2-3 and 7, in this embodiment of the present invention, a hanging plate 16 is detachably mounted on one side of the mounting base 11 away from the covering 13, and the hanging plate 16 has a mounting hole 161 on a surface of the hanging plate 16.

It should be understood that, in the embodiments of the present application, during mounting the alarm 10, the hanging plate 16 is firstly mounted at a desired position, and a combination of the mounting base 11 and the covering 13 is mounted at the hanging plate 16. During mounting the hanging plate 16, a hole is drilled at the desired position corresponding to a position of the mounting hole 161 in the hanging plate 16, the mounting hole 161 is then aligned with the drilled hole at the desired position, and the hanging plate 16 is fixedly mounted at the desired position through a screw.

In this way, the hanging plate 16 is fixed at the desired position, and a function part formed by the combination of the mounting base 11 and the covering 13 is then mounted at the hanging plate 16. When it is necessary to maintain the alarm 10, the functional part of the alarm 10 can be detached from the desired position by separating the covering 13 from the hanging plate 16, so that the functional part of the alarm 10 can be maintained (for example, the obstacle at the air flow passage 14 is removed). After the maintenance of the alarm 10 is completed, the functional part of the alarm 10 is remounted on the corresponding hanging plate 16 without drilling a hole again.

### Embodiment 9

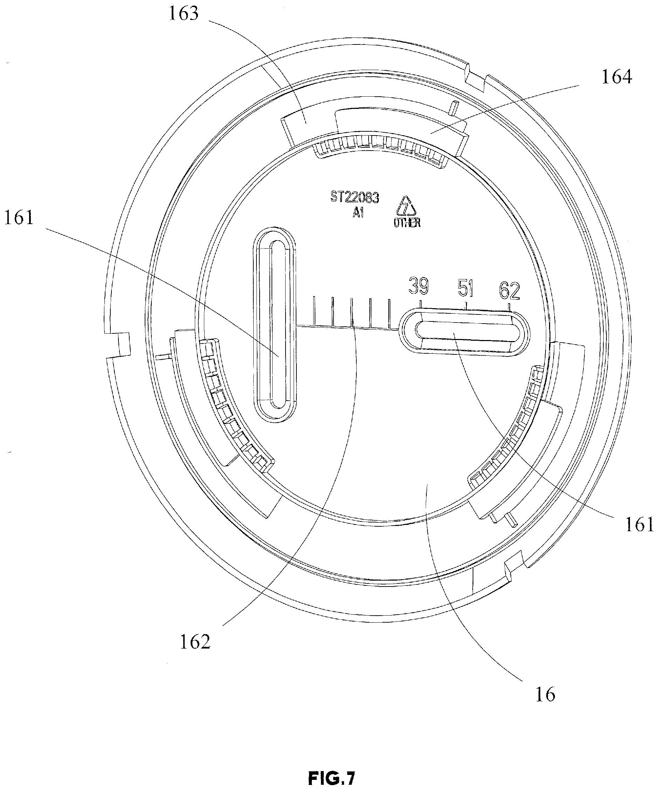

With reference to Fig. 7, in this embodiment of the present invention, the mounting hole 161 is a waist-shaped hole with a scale 162, and the number of the mounting hole 161 is at least one, and the scale 162 is arranged between adjacent mounting holes 161.

It should be understood that, in the embodiments of the present application, before the hanging plate 16 is mounted at the desired position, a hole needs to be drilled at the desired position corresponding to a position of the mounting hole 161 of the hanging plate 16. The pitch between mounting holes 161 and the aperture can be quickly determined through the scale 162 at the mounting holes 161 of the hanging plate 16 and between the two adjacent mounting holes 161.

In this way, the hanging plate 16 can be mounted more conveniently, accurately and quickly.

Specifically, when the number of the mounting hole 161 is one, a hole is drilled at the position corresponding to the mounting hole 161, and the pitch of the drilled hole is determined according to the scale 162 at the mounting hole 161. At this time, during mounting the hanging plate 16, a plurality of screws may be correspondingly mounted in the same mounting hole 161, and the hanging plate 16 is firmly mounted at the desired position by the plurality of screws.

On the other hand, when the number of the mounting hole 161 is more than one, the pitch of the drilled hole may be determined according to the scale 162 between the adjacent mounting holes 161. At this time, the hanging plate 16 is positioned by a plurality of mounting holes 161, and the hanging plate 16 is fixed at the desired position by using a plurality of screws, so that the hanging plate 16 is mounted firmly at the desired position.

### Embodiment 10

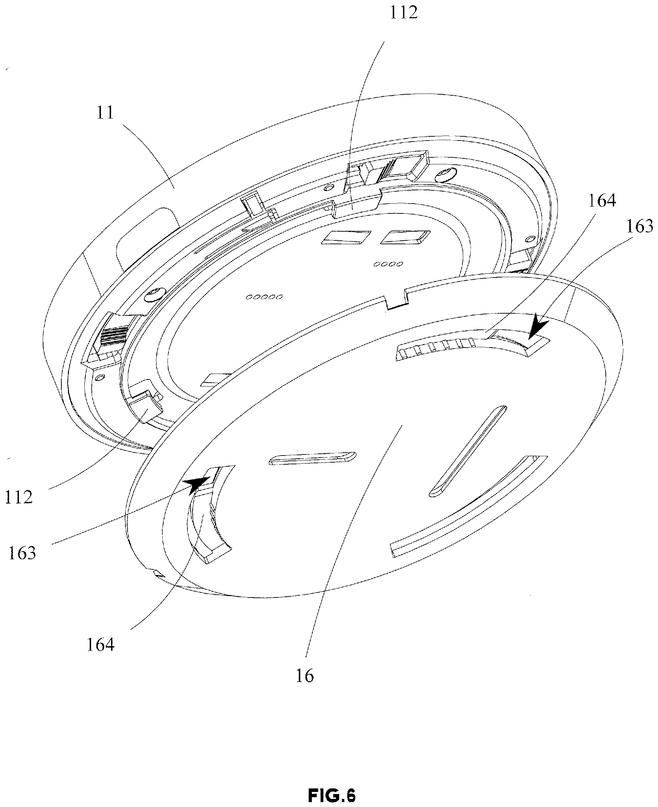

With reference to Figs. 6-7, in this embodiment of the present invention, one of the mounting base 11 and the hanging plate 16 has a neck 163, the other one of the mounting base 11 and the hanging plate 16 has a first clamping block 112.

A second clamping block 164 is inserted into the neck 163. When the mounting base 11 is rotated relative to the hanging plate 16, the first clamping block 112 is capable of being slidable in the neck 163 and finally catches the second clamping block 164.

In this way, the mounting base 11 can be mounted or detached at the hanging plate 16 quickly and conveniently.

In the embodiments of the present application, when the mounting base 11 is mounted at the hanging plate 16, the mounting base 11 is moved close to the hanging plate 16, and the clamping block 112 extends into the neck 163. By rotating the mounting base 11 relatively, the first clamping block 112 slides in the neck 163 until the clamping block 112 catches the second clamping block 164 in the neck 163.

In this way, the mounting base 11 is mounted.

When it is necessary to detach the mounting base 11 from the hanging plate 16, the mounting plate 11 is rotated relative to the hanging plate 16 in a rotation direction opposite to that in mounting, and the first clamping block 112 slides in the neck 163 until the first block 112 is separated from the second clamping block in the neck 163. Then, the mounting base 11 moves away from the hanging plate 16.

In this way, the mounting base 11 is detached.

Specifically, in the embodiments of the present application, the hanging plate 16 or the mounting base 11 has the neck 163. For example, if the hanging plate 16 has the neck 163, the first clamping block 112 is arranged at a position on the mounting base 11 corresponding to a position of the neck 163. The hanging plate 16 is fixed at the desired position. When it is necessary to mount the mounting base 11 on the hanging plate 16, the mounting base 11 is moved close to the hanging plate 16, and the first clamping block 112 is inserted into the neck 163. By rotating the mounting base 11, the first clamping block 112 is capable of being slidable in the neck 163 until the clamping block 112 catches the second clamping block 164 in the neck 163. The first clamping block 112 is limited in a radial direction of the hanging plate 16 by the neck 163, and the second clamping block 164 is limited in an axial direction of the hanging plate 16 by the second clamping block 164. In this way, the mounting base 11 is detachably mounted on the hanging plate 16.

Similarly, if it is necessary to detach the mounting base 11 from the hanging plate 16, the mounting plate 11 is rotated reversely, and the first clamping block 112 slides in the neck 163 away from the second clamping block 164 until the first clamping block 112 is separated from the second clamping block 164. In this way, the mounting base 11 is detached from the hanging plate 16.

### Embodiment 11

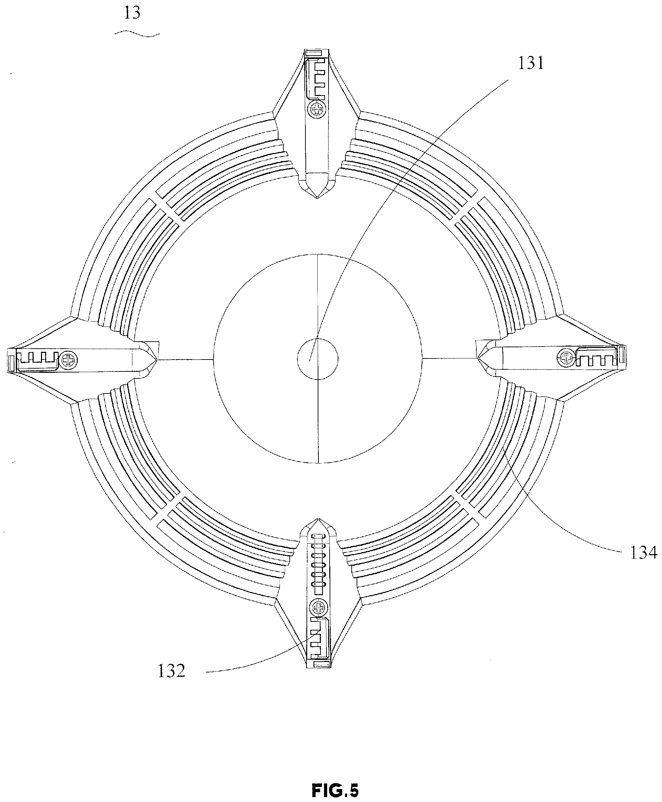

With reference to Figs. 1 and 4-5, in this embodiment of the present invention, the covering 13 has an annular edge and a top end surface adjacent to the mounting base 11; the covering 13 has an inclined surface located adjacent to the air flow passage 14 extending from the annular edge to a center of the top end surface; the covering 13 has a grid 134 on the inclined surface, and the grid 134 has a plurality of grid strips 135 successively stacked on from the annular edge to the top end surface.

The alarm sensor 15 is disposed on the covering 13.

It should be understood that, after the air flow reaches the alarm 10, the air flow circulates in the air flow passage 14 and then enters the covering 13 through the grid 134. Since the alarm sensor 15 is disposed on the covering 13, after the air flow enters the covering 13, the air flow can be monitored by the alarm sensor 15, and the smoke concentration in the air flow near the alarm 10 is monitored by the alarm sensor 15.

When the alarm 10 is a smoke alarm, the alarm sensor 15 will be affected by dust, resulting in a false alarm. Therefore, by arranging the alarm sensor 15 on the covering 13, the dust is blocked by the covering 13, and the dust outside the alarm 10 is prevented from affecting the alarm sensor 15.

As time goes on, the dust will be accumulated at the covering 13 and even enters the covering 13 through the grid 134, thus affecting the monitoring of smoke concentration by the alarm sensor 15.

Therefore, the covering 13 has an annular edge and a top end surface adjacent to the mounting base 11; the covering 13 has an inclined surface located adjacent to the air flow passage 14 extending from the annular edge to a center of the top end surface; the covering 13 has a grid 134 on the inclined surface, and the grid 134 has a plurality of grid strips 135 successively stacked on from the annular edge to the top end surface, adjacent grid strips 135 are partially overlapped in a direction perpendicular to an inlet of the grid 134, and adjacent grid strips 135 extend from the annular edge to the center of the top end surface.

In this way, the grid 134 that is opened in a direction of a side of the covering 13 and not opened in a direction of the top end surface of the covering 13 is formed.

The alarm 10 is generally hung on the ceiling. When the alarm 10 is hung on the ceiling, the hanging plate 16 is firstly mounted on the ceiling, the covering 13 is then mounted on the mounting base 11, and the combination of the covering 13 and the mounting base 11 is mounted on the hanging plate 16.

In this mounting mode, the mounting base 11 is located above the covering 13, and the top end surface of the covering 13 faces toward the mounting base 11. Therefore, the top end surface of the covering 13 faces upward. Due to the gravity, the dust will fall on the top end surface of the covering 13. Since the grid 134 is opened in the direction of the side of the covering 13 and not opened in the direction of the top end surface of the covering 13, the duct cannot fall into the covering 13 through the grid 134.

In this way, the accumulated dust can be effectively prevented from entering the covering 13 through the grid 134 and thus affecting the alarm sensor 15, and the reliability of the alarm 10 is further improved.

In the description of the present invention, the terms "some embodiments", "schematic embodiments", "example", "specific embodiment", or "some examples", etc., represent that followed contents should be in conjunction with said embodiment or example or described specific features, structures, materials, or features belong to at least one embodiment or example of the invention. In this specification, schematic description of the above terms does not necessarily refer to identical embodiments or examples. Further, the specific features, structures, materials or features of each embodiment may be combined in a suitable manner in any one or more embodiments or examples.

In addition, the above-stated embodiments are only better embodiments of the present invention and are not intended to limit the invention, and any modification, equivalent replacement, improvement, etc. made within the spirit and principles of the present invention shall be included in the scope of protection of the invention.

## Claims

1. An alarm (10) with a function of obstacle detection, comprising:
a mounting base (11);
an obstacle sensor (12) mounted on the mounting base (11);
a covering (13); and
an alarm sensor (15) disposed on the covering (13);
**characterized in that**,
an air flow passage (14) for allowing a detected object to reach the alarm sensor (15) is defined between the covering (13) and the mounting base (11);
the obstacle sensor (12) has a detection region, both the air flow passage (14) and the alarm sensor (15) are located within the detection region of the obstacle sensor (12).

2. The alarm according to claim 1, **characterized in that** a reflector (131) in a conical shape is connected to the covering (13) being adjacent to the mounting base (11);
the reflector (131) has a tip facing the obstacle sensor (12) and being aligned with a center of the obstacle sensor (12).

3. The alarm according to claim 1, **characterized in that** the obstacle sensor (12) is an ultrasonic sensor.

4. The alarm according to claim 1, **characterized in that** the covering (13) has at least one support leg (132), the covering (13) is detachably connected to the mounting base (11) through the support leg (132).

5. The alarm according to claim 4, **characterized in that** the mounting base (11) has at least one limiting member (114), each support leg (132) has an end with an insertion member (136) extending from the end of each covering (13), each insertion member (136) has a limiting hole (137) which is adapted to the limiting member (114) for receiving a corresponding limiting member (114);
the mounting base (11) has at least one insertion hole (113) which is adapted to the insertion member (136) for receiving a corresponding insertion member (136);
**characterized in that** when each insertion member (136) is inserted into the corresponding insertion hole (113), each limiting member (114) is inserted into the corresponding limiting hole (137).

6. The alarm according to claim 5, **characterized in that** the number of the support leg (132) is four and each support leg (132) has one insertion member (136) at the end of the support leg (132), the position and the number of the insertion holes (113) correspond to the position and the number of the support legs (132).

7. The alarm according to claim 5, **characterized in that** each limiting member (114) has an end with a wedge-shaped slope (115);
when the insertion member (136) moves toward corresponding insertion hole (113), the insertion member (136) touches the limiting member (114) and push the limiting member (114) through the wedge-shaped slope (115), and each limiting member (114) resists against the corresponding insertion member (136) through a spring (116).

8. The alarm according to claim 1, **characterized in that** the covering (13) has a first port (133), and the mounting base (11) has a second port (111), the first port (133) is adapted to the second port (111);
a circuit in the covering (13) is electrically connected to a circuit in the mounting base (11) when the first port (133) is connected to the second port (111).

9. The alarm according to claim 8, **characterized in that** the covering (13) has at least one support leg (132), the first port (133) is located at the support leg (132), the position of the second port (111) corresponds to the position of the first port (133).

10. The alarm according to claim 1, **characterized in that** the covering (13) has an annular edge and a top end surface adjacent to the mounting base (11);
the covering (13) has an inclined surface located adjacent to the air flow passage (14) extending from the annular edge to a center of the top end surface;
the covering (13) has a grid (134) on the inclined surface, and the grid (134) has a plurality of grid strips (135) successively stacked on from the annular edge to the top end surface.
